# EUROPÄISCHE PATENTSCHRIFT

(11) **EP 0 533 885 B1**
(45) Veröffentlichungstag und Bekanntmachung des Hinweises auf die Patenterteilung: **21.12.1994**
(21) Anmeldenummer: 92908456.4
(22) Anmeldetag: 15.04.1992
(51) Int. Cl.: B60R 21/26, B60R 21/32

(54) **EINRICHTUNG ZUR PLÖTZLICHEN FREISETZUNG EINES IN EINEM BEHÄLTER LANGFRISTIG UNTER HOHEM DRUCK GESPEICHERTEN GASES**
DEVICE FOR SUDDENLY RELEASING A GAS STORED FOR A LONG PERIOD AT HIGH PRESSURE IN A CONTAINER
SYSTEME POUR LA LIBERATION INSTANTANEE D'UN GAZ STOCKE SOUS HAUTE PRESSION DANS UN RESERVOIR SUR UNE LONGUE PERIODE

(30) Priorität: 15.04.1991 DE 9104577 U
(43) Veröffentlichungstag der Anmeldung: 31.03.1993
(73) Patentinhaber: TRW Occupant Restraint Systems GmbH, 73553 Alfdorf (DE)
(72) Erfinder: Föhl, Artur, D-7060 Schorndorf (DE)
(74) Vertreter: Degwert, Hartmut, Dipl.-Phys.
(86) Internationale Anmeldenummer: EP9200849
(87) Internationale Veröffentlichungsnummer: WO9218356

(56) Entgegenhaltungen:
- DE-A- 2 052 621
- FR-A- 2 072 944
- FR-A- 2 096 188
- GB-A- 2 220 620
- US-A- 3 780 752

## Beschreibung

Die Erfindung betrifft eine Einrichtung zur plötzlichen Freisetzung eines in einem Behälter langfristig unter hohem Druck gespeicherten Gases zum Aufblasen eines Gassacks in einem Fahrzeuginsassen-Rückhaltesystem, mit einem Sperrkörper aus vorgespanntem Glas, der in Strömungsrichtung vor der wenigstens einen Ausströmöffnung des Behälters angeordnet ist und im Zusammenwirken mit einer Dichtung diese Ausströmöffnung verschlossen hält, und mit einer fahrzeugsensitiven Auslöseeinrichtung, durch die das Stoffgefüge des Sperrkörpers in solchem Maße störbar ist, daß dieser spontan in pulverförmige Partikel zerfällt.

Eine Einrichtung der oben angegebenen Art ist mit den im Oberbegriff des Anspruchs 1 aufgeführten Merkmalen aus der DE-OS 20 52 621 bekannt. Bei dieser Einrichtung ist der Sperrkörper zylindrisch ausgebildet und in eine Stufenbohrung eines Verschlußstopfens eingesetzt, der in eine Gewindeöffnung des Behälters eingeschraubt ist. Dieser Sperrkörper stützt mit seiner dem Behälterinneren zugewandten Stirnfläche eine Dichtfolie ab. Diese Dichtfolie verschließt auch einen im Inneren des Sperrkörpers ausgebildeten Ringraum, der eine elektrisch zündbare pyrotechnische Ladung aufnimmt. Durch Aktivierung dieser pyrotechnischen Ladung wird der Sperrkörper zerstört, so daß er in pulverförmige Partikel zerfällt und den koaxial im Verschlußstopfen gebildeten Ausströmkanal freigibt. Für eine zuverlässige Zerstörung des Sperrkörpers wird eine pyrotechnische Ladung erheblicher Stärke benötigt.

Durch die Erfindung wird eine Einrichtung zur plötzlichen Freisetzung eines in einem Behälter langfristig unter hohem Druck gespeicherten Gases geschaffen, die ebenfalls einen Sperrkörper aus vorgespanntem Glas vor der Ausströmöffnung oder den Ausströmöffnungen des Behälters aufweist und die sich dadurch auszeichnet, daß zur Zerstörung dieses Sperrkörpers eine geringe Energie ausreicht.

Gemäß der Erfindung ist der Sperrkörper mit einem von seiner Oberfläche vorzugsweise senkrecht abstehenden Fortsatz versehen, der einem Auslöseelement der Auslöseeinrichtung ausgesetzt ist, durch welches er plötzlich abgebrochen werden kann. Der Erfindung liegt die Erkenntnis zugrunde, daß zur spontanen Zerstörung des Sperrkörpers, wenn dieser aus vorgespanntem Glas besteht, eine Scherbeanspruchung über den Fortsatz in den massiven Teil des Sperrkörpers eingeleitet werden kann, wobei der Fortsatz einen Hebel bildet, an dessen freiem Ende eine geringe Kraft zur Erzeugung einer hohen Scherbeanspruchung an der Basis des Fortsatzes ausreicht. Durch das plötzliche Abbrechen des Fortsatzes unter dieser Beanspruchung wird zwar nur eine lokale Störung an der Oberfläche des Sperrkörpers erzeugt, es wurde jedoch gefunden, daß diese zur spontanen Zerstörung des Sperrkörpers ebenso wirksam ist wie die beim Stand der Technik vorgesehene pyrotechnische Sprengladung von erheblicher Stärke. Die zum Abbrechen des Fortsatzes erforderliche Kraft kann ohne weiteres durch eine fahrzeugsensitive Masse aufgebracht werden, die unmittelbar neben dem Sperrkörper angeordnet werden kann, so daß eine kompakte Baugruppe entsteht, die den fahrzeugsensitiven Auslösesensor beinhaltet.

Damit die zum Aufblasen eines Gassacks benötigte Gasmenge in einem kompakten Behälter untergebracht werden kann, muß das Gas unter einem extrem hohen Druck von einigen hundert Atmosphären gespeichert werden. An die Behälter werden daher hohe Anforderungen hinsichtlich der Langzeit-Druckfestigkeit gestellt. Da der Gasdruck im Inneren des Behälters nach den bekannten physikalischen Gesetzen von der Gastemperatur abhängt, muß bei der Dimensionierung des Behälters der im normalen Fahrzeugbetrieb auftretende Temperaturbereich berücksichtigt werden. Es ist jedoch kaum möglich, den Behälter auch für extrem hohe Temperaturen auszulegen, wie sie beispielsweise bei einem Fahrzeugbrand auftreten können. Um bei einer Überhitzung des Behälters eine Explosion desselben zu verhindern, ist gemäß einer Weiterbildung der Erfindung vorgesehen, daß die Ausströmöffnung des Behälters bereits vor einer bedenklichen Überhitzung desselben kontrolliert freigegeben wird, indem der Sperrkörper durch Abbrechen seines Fortsatzes zerstört wird. Zu diesem Zweck ist unabhängig von der fahrzeugsensitiven Auslöseeinrichtung ein thermisches Auslöseelement, insbesondere ein mit dem Behälter in thermischem Kontakt stehendes Bimetall-Element, vorgesehen, durch dessen temperaturabhängige Verformung der Fortsatz mit einer Scherkraft beaufschlagt und schließlich abgebrochen wird.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen Querschnitt durch einen Druckgasbehälter, dessen Ausströmöffnungen durch einen Sperrkörper aus vorgespanntem Glas verschlossen gehalten werden;
- Fig. 2: eine fahrzeugsensitive Auslöseeinrichtung mit einem Massekörper;
- Fig. 3: eine fahrzeugsensitive Auslöseeinrichtung mit pyrotechnischer Ladung und einem durch diese beaufschlagbaren Massekörper;
- Fig. 4: eine fahrzeugsensitive Auslöseeinrichtung mit pyrotechnischer Ladung, die zur Erzeugung einer Stoßwelle geeignet ist;
- Fig. 5: einen axialen Teilschnitt eines Druckgasbehälters im Bereich seiner Ausströmöffnung;
- Fig. 6: einen Schnitt entlang Linie VI-VI in Fig. 5; und
- Fig. 7: eine zu Fig. 6 analoge Schnittansicht, die eine andere Ausführungsform der fahrzeugsensitiven Auslöseeinrichtung zeigt.

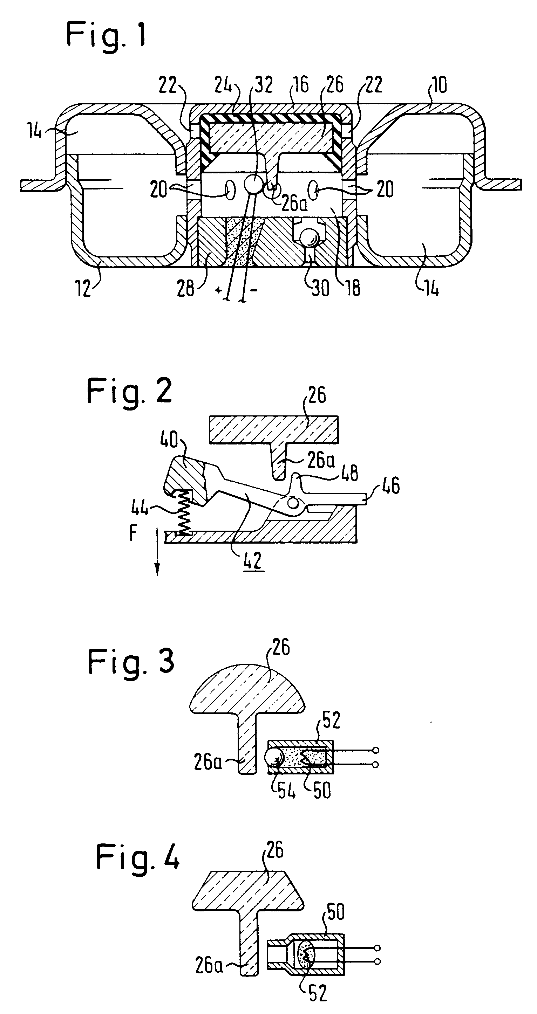

Der in Fig. 1 gezeigte Druckgasbehälter ist aus Gehäuseteilen 10, 12, die eine ringförmige Druckgas-Kammer 14 bilden, und einem mittleren Gehäuseteil 16 gebildet, welches eine zylindrische Kammer 18 umschließt. Diese Kammer 18 ist durch mehrere Öffnungen 20 mit der Druckgas-Kammer 14 verbunden. In dem Gehäuseteil 16 befinden sich Ausströmöffnungen 22, die durch ein Dichtelement 24 und einen dieses an die Innenwandung der Kammer 18 andrückenden Sperrkörper 26 verschlossen gehalten sind. Der Gasdruck im Inneren der Kammer 14 kann einige hundert Atmosphären betragen. Der durch diesen Druck beaufschlagte Sperrkörper 26 wird gegen das Dichtelement 24 und dieses gegen die Innenwandung der Kammer 18 gepreßt.

Auf der dem Sperrkörper 26 gegenüberliegenden Seite ist die Kammer 18 durch einen Deckel 28 verschlossen, in dem ein mit Rückschlagventil versehener Einfüllkanal 30 gebildet ist.

Der Sperrkörper 26 besteht aus einem Material, welches die Eigenschaft aufweist, bei einer lokalen mechanischen Störung seines Stoffgefüges spontan in eine Vielzahl von Partikeln zu zerfallen. Ein solches Material ist vorgespanntes Glas. Er ist mit einem zapfen- oder stiftförmigen Fortsatz 26a versehen, der senkrecht von seiner der Kammer 18 zugekehrten Fläche absteht. Eine elektrisch aktivierbare Zündpille 32 ist unmittelbar neben diesem Fortsatz 26a angeordnet. Die elektrischen Zuleitungsdrähte für diese Zündpille 32 sind durch den Deckel 28 hindurchgeführt und in diesem druckfest abgedichtet.

Die lokale mechanische Störung des Stoffgefüges des Sperrkörpers 26 erfolgt bei dieser Ausführungsform durch Abbrechen des Fortsatzes 26a mittels der pyrotechnischen Zündpille 32, die durch einen fahrzeugsensitiv erzeugten elektrischen Impuls aktiviert wird. Durch diese lokale mechanische Störung des Stoffgefüges des Sperrkörpers 26 zerfällt dieser spontan zu Glasstaub oder kleinsten Glaspartikeln, deren Größe durch die Herstellungs- und Zusammensetzungsparameter des Sperrkörpers steuerbar ist. Durch den extrem hohen Druck im Inneren der Kammern 14 und 18 wird alsdann das Dichtelement 24 zerrissen, so daß die Ausströmöffnungen 22 freigegeben werden. Mit den so freigesetzten Druckgasen kann ein Luftsack in einem Fahrzeuginsassen-Rückhaltesystem aufgeblasen werden. Bei einer anderen Ausführungsform ist vorgesehen, mittels der so plötzlich freigesetzten Druckgase einen pneumatischen Antrieb eines Gurtstraffers in einem Sicherheitsgurt-Rückhaltesystem zu aktivieren.

Bei der in Fig. 2 gezeigten Ausführungsform wird die lokale mechanische Störung des Stoffgefüges des Sperrkörpers 26 rein mechanisch erzeugt. Eine fahrzeugsensitive Masse 40 ist am Ende eines schwenkbar gelagerten Hebels 42 angeordnet, der durch eine Druckfeder 44 in einer Ruhestellung gehalten wird. Diese Ruhestellung wird durch einen Hebelarm 46 definiert, der an einer Anschlagfläche zur Anlage kommt. Ein Hebelarm 48 befindet sich bei der in Fig. 2 gezeigten Ruhestellung in geringem Abstand von dem Fortsatz 26a des Sperrkörpers 26. Unter der Wirkung einer in Richtung des Pfeiles F an der Trägheitsmasse 40 angreifenden Trägheitskraft wird der Hebel 42 entgegen der Wirkung der Druckfeder 44 und entgegen dem Uhrzeigersinn verschwenkt, bis der Hebelarm 48 an dem Fortsatz 26a anstößt und diesen abbricht.

Bei der in Fig. 3 gezeigten Ausführungsform ist die fahrzeugsensitive Auslöseeinrichtung durch eine elektrisch zündbare pyrotechnische Ladung 50 gebildet, die in einem zylindrischen Rohr 52 angeordnet ist, welches an seinem freien Ende durch einen Massekörper in Form einer Kugel 54 verschlossen und gegenüber dem freien Ende des Fortsatzes 26a des Sperrkörpers 26 angeordnet ist. Durch Aktivierung der pyrotechnischen Ladung 50 wird die Kugel 54 wie ein Projektil gegen den Fortsatz 26a geschleudert und bricht diesen ab.

Bei der Ausführungsform nach Fig. 4 ist die fahrzeugsensitive Auslöseeinrichtung gleichfalls durch eine elektrisch zündbare pyrotechnische Ladung 50 in einem zylindrischen Rohr 52 gebildet. Dieses zylindrische Rohr 52 ist an seinem dem Fortsatz 26a gegenüberliegenden freien Ende verjüngt als Düse ausgebildet. Diese Einrichtung ist zur Erzeugung einer Stoßwelle geeignet, durch die der Fortsatz 26a von dem Sperrkörper 26 abgebrochen wird.

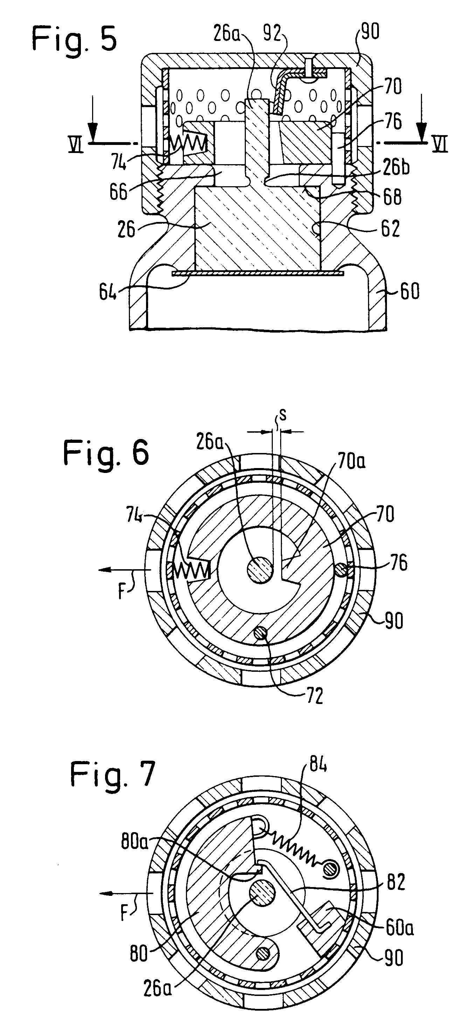

In den Figuren 5 und 6 ist eine Ausführungsform mit annähernd zylindrischem Druckgasbehälter 60 gezeigt. Dieser Behälter 60 ist in noch zu beschreibender Weise mit einem fahrzeugsensitiven Auslösemechanismus zu einer Baugruppe vereinigt.

Der Druckgasbehälter 60 ist an seinem in Fig. 5 gezeigten axialen Ende mit einem zylindrischen Aufnahmeraum 62 für einen massiv ausgebildeten, zylindrischen Sperrkörper 26 versehen. Die dem Behälterinneren zugewandte Stirnfläche des Sperrkörpers 26 stützt eine metallische Dichtfolie 64, die an ihrem Außenrand mit der Innenseite des Druckgasbehälters 60 dicht verbunden, insbesondere verschweißt ist. Die Dichtfolie 64 schließt den Aufnahmeraum 62 zur Behälterinnenseite hin ab. Koaxial mit dem Aufnahmeraum 62 angeordnet ist eine Ausströmöffnung 66 des Druckgasbehälters 60. Zwischen dieser Ausströmöffnung 66 und dem zylindrischen Aufnahmeraum 62 ist eine radiale Ringschulter 68 gebildet, auf der sich der Sperrkörper 26 abstützt. Koaxial aus der Ausströmöffnung 66 ragt der zapfenförmige Fortsatz 26a des Sperrkörpers 26 heraus. Im Bereich seiner an dem massiven Teil des Sperrkörpers 26 angrenzenden Basis ist der Fortsatz 26a mit einer umlaufenden Ringnut 26b versehen. Diese Ringnut 26b gewährleistet ein Abbrechen des Fortsatzes 26a mittels einer besonders geringen Auslösekraft und unter genau reproduzierbaren Bedingungen.

An dem in Fig. 5 gezeigten stirnseitigen Ende des Druckgasbehälters 60 ist ein ringförmiger fahrzeugsensitiver Massekörper 70 auf einem Stift 72 schwenkbar gelagert. Der Massekörper 70 wird durch eine Druckfeder 74 gegen einen stiftförmigen Anschlag 76 in einer solchen Ruhestellung gehalten, daß ein radial einwärts gerichteter Ansatz 70a des Massekörpers 70 in einem vorbestimmten Abstand s von dem Fortsatz 26a des Sperrkörpers 26 verbleibt. Der Druckgasbehälter 60 wird im Fahrzeug so eingebaut, daß der Massekörper 70 entgegen der Kraft der Druckfeder 74 in Fahrtrichtung verschwenkbar ist; die Fahrtrichtung ist in Fig. 6 durch einen Pfeil F gekennzeichnet. Bei ausreichender Fahrzeugverzögerung wird der Fortsatz 26a des Sperrkörpers 26 durch Anschlagen des Ansatzes 70a abgebrochen.

Bei der in Fig. 7 gezeigten Ausführungsvariante ist der fahrzeugsensitive Massekörper 80 halbringförmig ausgebildet und dient als Abstützung für eine vorgespannte Schlagfeder 82, die in einem axialen Ansatz 60a des Druckgasbehälters 60 verankert ist. Das freie Ende dieser als Blattfeder ausgebildeten Schlagfeder 82 wird durch eine Anschlagnase 80a des Massekörpers 80 im Abstand von dem Fortsatz 26a des Sperrkörpers 26 gehalten. Durch eine Zugfeder 84 wird der fahrzeugsensitive Massekörper 80 in der in Fig. 7 gezeigten Ruhestellung gehalten. Durch fahrzeugsensitive Verschwenkung des Massekörpers 80 in Richtung des Pfeiles F wird die Schlagfeder 82 freigegeben, so daß sie mit ausreichender Kraft auf dem Fortsatz 26a auftrifft, um diesen abzubrechen.

Bei beiden Ausführungsformen wird durch das Abbrechen des Fortsatzes 26a eine spontane Zerstörung des massiven Teils des Sperrkörpers 26 bewirkt, so daß die Ausströmöffnung 66 des Druckgasbehälters 60 freigegeben wird.

Wie weiter aus Fig. 5 ersichtlich ist, trägt der Druckgasbehälter 60 an seinem axialen Ende eine aufgeschraubte Kappe 90. An der Innenseite dieser Kappe 90 ist ein annähernd rechtwinklig abgebogenes Bimetall-Element 92 in Wärmekontakt mit der Kappe 90 und folglich auch mit dem Druckgasbehälter 60 befestigt. Das freie Ende des Bimetall-Elements 92 liegt dem Ende des Fortsatzes 26a des Sperrkörpers 26 in vorbestimmtem Abstand gegenüber, solange der vorgesehene Betriebstemperaturbereich eingehalten wird, für den der Druckgasbehälter 60 ausgelegt ist. Bei einer Überschreitung dieses Wertes tritt eine Verformung des Bimetall-Elements 92 ein, so daß dessen freies Ende sich an dem des Fortsatzes 26a abstützt und diesen mit einer Kraft beaufschlagt, die bei zunehmender Erwärmung stark ansteigt. Noch bevor eine Temperatur erreicht ist, bei der ein Bersten des Druckgasbehälters 60 zu befürchten wäre, wird der Fortsatz 26a durch das Bimetall-Element 92 abgebrochen, so daß der Sperrkörper 26 zerstört und der Druckgasbehälter 60 entlastet wird.

Der in Fig. 5 gezeigte thermische Schutz des Druckgasbehälters 60 ist unabhängig von dem fahrzeugsensitiven Auslösemechanismus und kann in ähnlicher Ausführung auch bei der in Fig. 1 gezeigten Ausführungsform Anwendung finden. Auch bei den in den Figuren 2 bis 4 gezeigten Ausführungsformen der Auslöseeinrichtung wird vorzugsweise ein thermischer Schutz der in Fig. 5 gezeigten Art zusätzlich zu der fahrzeugsensitiven Auslöseeinrichtung vorgesehen.

## Patentansprüche

1. Einrichtung zur plötzlichen Freisetzung eines in einem Behälter (10, 12; 60) langfristig unter hohem Druck gespeicherten Gases zum Aufblasen eines Gassacks in einem Fahrzeuginsassen-Rückhaltesystem, mit einem Sperrkörper (26) aus vorgespanntem Glas, der in Strömungsrichtung vor der wenigstens einen Ausströmöffnung (22; 66) des Behälters (10, 12; 60) angeordnet ist und im Zusammenwirken mit einer Dichtung (24; 64) diese Ausströmöffnung verschlossen hält, und mit einer fahrzeugsensitiven Auslöseeinrichtung, durch die das Stoffgefüge des Sperrkörpers (26) in solchem Maße störbar ist, daß dieser spontan in pulverförmige Partikel zerfällt, dadurch gekennzeichnet, daß der Sperrkörper (26) einen von seiner Oberfläche abstehenden Fortsatz (26a) aufweist, der einem Auslöseelement (32; 48; 54; 50; 70; 80) der Auslöseeinrichtung ausgesetzt ist, durch welches er plötzlich abgebrochen werden kann.

2. Einrichtung nach Anspruch 1, dadurch gekennzeichnet, daß der Fortsatz (26a) zapfenförmig ausgebildet und im Bereich seiner Basis mit einer Kerbe oder Nut (26b) versehen ist.

3. Einrichtung nach Anspruch 1 oder 2, dadurch gekennzeichnet, daß das Auslöseelement ein durch eine elektrisch zündbare pyrotechnische Ladung (50) beaufschlagbarer Massekörper (54) ist.

4. Einrichtung nach Anspruch 1 oder 2, dadurch gekennzeichnet, daß das Auslöseelement durch eine elektrisch zündbare pyrotechnische Ladung (50) gebildet ist, die bei Aktivierung eine Stoßwelle erzeugt.

5. Einrichtung nach Anspruch 1 oder 2, dadurch gekennzeichnet, daß das Auslöseelement durch einen fahrzeugsensitiven Massekörper (40; 70; 80) gebildet ist.

6. Einrichtung nach Anspruch 1 oder 2, dadurch gekennzeichnet, daß das Auslöseelement durch ein federbelastetes Schlagelement (82) gebildet ist, das durch einen fahrzeugsensitiven Massekörper (80) in einer Ruhestellung im Abstand von dem Fortsatz (26a) des Sperrkörpers (26) abgestützt ist.

7. Einrichtung nach einem der vorstehenden Ansprüche, dadurch gekennzeichnet, daß der Fortsatz des Sperrkörpers (26a) unabhängig von der Auslöseeinrichtung einem Bimetallelement (92) ausgesetzt ist, das mit dem Behälter (60) in thermischem Kontakt steht.

8. Einrichtung nach einem der vorstehenden Ansprüche, dadurch gekennzeichnet, daß der Sperrkörper (26) als massives Stützteil ausgebildet und in einen der Ausströmöffnung (66) des Behälters (60) benachbarten Aufnahmeraum (62) passend eingesetzt ist, daß dieses Stützteil mit seiner dem Behälterinneren zugewandten Stirnfläche eine Dichtfolie (64) abstützt, die den Aufnahmeraum (62) zum Behälterinneren abgrenzt und an ihrem Außenrand mit der Innennseite der Behälterwandung dicht verbunden ist, sowie an seiner gegenüberliegenden Stirnfläche auf einer Schulter (68) abgestützt ist, die zwischen Aufnahmeraum (62) und Ausströmöffnung (66) gebildet ist, und daß der Fortsatz (26a) des Sperrkörpers (26) aus der Ausströmöffnung (66) des Behälters (60) herausragt.

9. Einrichtung nach den Ansprüchen 5 und 8, dadurch gekennzeichnet, daß die fahrzeugsensitive Auslöseeinrichtung (70, 72, 74) mit dem Behälter (60) zu einer Baugruppe vereinigt und der Massekörper (70) unmittelbar neben dem Fortsatz (26a) des Sperrkörpers (26) angeordnet ist.

10. Einrichtung nach einem der vorstehenden Ansprüche, dadurch gekennzeichnet, daß der Fortsatz (26a) des Sperrkörpers (26) zumindest annähernd senkrecht von diesem absteht und das Auslöseelement an dem freien Ende des Fortsatzes angreift.

## Claims

1. A device for sudden release of gas stored for a long term under high pressure in a container (10, 12; 60) to inflate a gas bag in a vehicle occupant restraining system, comprising a blocking body (26) consisting of prestressed glass arranged upstream from the at least one discharge opening (22; 66) of the container (10, 12; 60) and closing in cooperation with a seal (24; 64) said discharge opening, a vehicle-sensitive actuating device which is capable to disturb the material structure of the blocking body (26) to such an extent that the blocking body spontaneously disintegrates into powdery particles, characterized in that the blocking body (26) comprises an extension (26a) which protrudes from its surface and is exposed to a release element (32; 48; 54; 50; 70; 80) of the actuating device by which it suddenly can be broken off.

2. The device according to claim 1, characterized in that the extension (26a) is formed pin-shaped and provided with a notch or groove (26b) in the region of its base.

3. The device according to claim 1 or 2, characterized in that the actuating element is a mass body (54) which can be subjected to a pyrotechnical charge (50) being electrically ignitable.

4. The device according to claim 1 or 2, characterized in that the actuating element consists of an electrically ignitable pyrotechnical charge (50) which upon actuation generates a shock wave.

5. The device according to claim 1 or 2, characterized in that the actuating element consists of a vehicle-sensitive mass body (40; 70; 80).

6. The device according to claim 1 or 2, characterized in that the actuating element consists of a spring-loaded striking element (82) which is supported in a rest position spaced from the extension (26a) of the blocking body (26).

7. The device according to any one of the preceding claims, characterized in that independently from said actuating device the extension (26a) of the blocking body is exposed to a bimetallic element (92) which is in thermal contact with the container (60).

8. The device according to any one of the preceding claims, characterized in that the blocking body (26) is formed as a solid support member and inserted in matching manner into a receiving space (62) adjacent to the discharge opening (66) of the container (60), that this support member with its end surface facing the inside of the container supports a sealing foil (64) which delimits the receiving space (62) from the inside of the container and with its outer edge is connected in a tight manner with the inner surface of the container wall and with its opposite end surface is supported on a shoulder (68) formed between the reception space (62) and the discharge opening (66), and that the extension (26a) of the blocking body (26) protrudes from the discharge opening (66) of the container (60).

9. The device according to the claims 5 and 8, characterized in that the vehicle-sensitive actuating device (70, 72, 74) is united with the container (60) to a subassembly and the mass body (70) is disposed immediately adjacent the extension (26a) of the blocking body (26).

10. The device according to any one of the preceding claims, characterized in that the extension (26a) of the blocking body (26) protrudes at least approximately perpendicular from the blocking body and the actuating element engages the free element of the extension.

## Revendications

1. Dispositif de libération brusque d'un gaz stocké sous haute pression pendant une longue durée dans un récipient (10, 12 ; 60) en vue de gonfler un coussin gonflable de sécurité dans un système de retenue pour les occupants d'un véhicule, ledit dispositif comprenant un corps d'arrêt (26) en verre précontraint qui est disposé dans le sens d'écoulement devant une ouverture de sortie (22 ; 66), au nombre d'au moins une, du récipient (10, 12 ; 60) et qui, en coopération avec un joint (24 ; 64), maintient cette ouverture de sortie fermée, et comprenant un dispositif de déclenchement qui est sensible au comportement du véhicule et qui permet de perturber la structure du matériau du corps d'arrêt (26) au point de décomposer celui-ci spontanément en particules pulvérulentes, caractérisé en ce que le corps d'arrêt (26) comporte un prolongement (26a) qui dépasse de sa surface et qui est exposé à un élément de déclenchement (32 ; 48 ; 54 ; 50 ; 70 ; 80) du dispositif de déclenchement qui permet de le casser brusquement.

2. Dispositif selon la revendication 1, caractérisé en ce que le prolongement (26a) est conçu sous la forme d'un téton et est pourvu, dans la zone de sa base, d'une entaille ou d'une gorge (26b).

3. Dispositif selon la revendication 1 ou 2, caractérisé en ce que l'élément de déclenchement est un corps formant masse (54) qui peut être sollicité par une charge pyrotechnique (50) à amorçage électrique.

4. Dispositif selon la revendication 1 ou 2, caractérisé en ce que l'élément de déclenchement est formé par une charge pyrotechnique (50) à amorçage électrique, qui, lorsqu'elle est activée, produit une onde de choc.

5. Dispositif selon la revendication 1 ou 2, caractérisé en ce que l'élément de déclenchement est formé par un corps formant masse (40 ; 70 ; 80) sensible au comportement du véhicule.

6. Dispositif selon la revendication 1 ou 2, caractérisé en ce que l'élément de déclenchement est formé par un élément percutant (82) à sollicitation élastique qui, par l'intermédiaire d'un corps formant masse (80) sensible au comportement du véhicule, est soutenu en position de repos, à distance du prolongement (26a) du corps d'arrêt (26).

7. Dispositif selon l'une des revendications précédentes, caractérisé en ce que le prolongement du corps d'arrêt (26a) est exposé, indépendamment du dispositif de déclenchement, à un élément bimétallique (92) qui est en contact thermique avec le récipient (60).

8. Dispositif selon l'une des revendications précédentes, caractérisé en ce que le corps d'arrêt (26) est conçu sous la forme d'une pièce d'appui pleine et est inséré de manière ajustée dans une chambre réceptrice (62) voisine de l'ouverture de sortie (66) du récipient (60), en ce que cette pièce d'appui soutient, avec sa face frontale tournée vers l'intérieur du récipient, une feuille d'étanchéité (64) qui délimite la chambre réceptrice (62) par rapport à l'intérieur du récipient et est reliée de manière étanche, sur son bord extérieur, au côté intérieur de la paroi du récipient, ladite pièce d'appui prenant appui, sur sa face frontale opposée, sur un épaulement (68) formé entre la chambre réceptrice (62) et l'ouverture de sortie (66), et en ce que le prolongement (26a) du corps d'arrêt (26) dépasse de l'ouverture de sortie (66) du récipient (60).

9. Dispositif selon les revendications 5 et 8, caractérisé en ce que le dispositif de déclenchement (70, 72, 74) sensible au comportement du véhicule est réuni au récipient (60) pour former un ensemble structurel, et le corps formant masse (70) est disposé juste à côté du prolongement (26a) du corps d'arrêt (26).

10. Dispositif selon l'une des revendications précédentes, caractérisé en ce que le prolongement (26a) du corps d'arrêt (26) dépasse au moins sensiblement verticalement de celui-ci, et l'élément de déclenchement agit sur l'extrémité libre du prolongement.
